# EUROPEAN PATENT APPLICATION

(11) **EP 0 607 669 A1**
(43) Date of publication of application: **27.07.1994**
(21) Application number: 93309670.3
(22) Date of filing: 02.12.1993
(51) Int. Cl.: G06F 12/08

(54) **Data caching system and method**

(30) Priority: 21.01.1993 US 6744
(71) Applicant: ADVANCED MICRO DEVICES, INC., Sunnyvale, CA 94088 (US)
(72) Inventor: Johnson, William Michael, Austin, Texas 78746 (US); Thang,Tran, Austin,Texas 78730 (US)
(74) Representative: Wright, Hugh Ronald

(57) **Abstract**

A data caching system includes structure for servicing load requests, this structure including a block-size buffer into which data to be loaded into the data cache is temporarily stored.

## Description

This application is related to the following patent applications:

| US SERIAL NO | TITLE | EP APPLICATION NO |
|---|---|---|
| 08/006745 | Combination Prefetch Buffer and Instruction Cache | (our reference HRW/TT0138/BEP) |
| 08/006731 | Circuit for Delaying Data Latching from a Precharged Bus and Method | (our reference HRW/TT0167/BEP) |
| 08/007703 | Dram Access System and Method | (our reference HRW/TT0169/BEP) |

Our above listed European Patent applications are all filed on the same date as this application and are all hereby incorporated herein by reference as if reproduced in their entirety herein.

The present invention relates to data caching schemes such as schemes which are optimized to handle load requests.

As is mentioned in the related European Patent Application reference (HRW/TT0138/BEP), it is known to those skilled in the art to include a cache memory configuration in a computer system to provide a place for fast local storage of frequently accessed data. A cache system intercepts each one of the microprocessor memory references to see if the address of the required data resides in the cache. If the data does reside in the cache (a "hit"), it is immediately sent to the microprocessor from the cache without incurring the wait states necessary to access main system memory. If the data does not reside in the cache (a "miss"), the memory address reference is forwarded to the main memory controller and the data is retrieved from main memory. Since cache hits are serviced locally, a processor operating out of its local cache memory has a much lower "bus utilization", which reduces system bus bandwidth requirements, making more bus bandwidth available to other bus masters. This is significant because, as is well known to those skilled in the art, the bus in the computer; that is, the communications channel between the CPU and the system's memory and storage devices, is a principal bottleneck. Virtually all instructions and all data to be processed must travel this route at least once. Also, especially in cases involving a single memory and multiple processors, it is essential that the bus be used efficiently to maximize system performance.

Presently, it is not uncommon to implement a data cache on a processor chip. Such on-chip inclusion of a cache provides a faster data access of load requests from an associated execution unit. As is known to those skilled in the art, and as may otherwise be gathered from the discussion above, if there is a "hit" in such a data cache, the data may be sent in the next phase to the execution unit. If, on the other hand, there is a "miss" in the cache, the cache block is allocated for and reloaded with data from external memory.

As previously stated, a cache memory system intercepts memory references and forwards them to system memory only if they "miss" in the cache. Many prior art U. S. patents are directed to various aspects of cache memories and methods of accessing memories which include a cache memory section including: U. S. Patent 4,794,521 to Ziegler et al., U. S. Patent 4,646,233 to Weatherford et al., U. S. Patent 4,780,808 to Moreno et al., U. S. Patent 4,783,736 to Ziegler et al., U. S. Patent 4,195,342 to Joyce et al., U. S. Patent 4,370,710 to Kroft, U. S. Patent 4,476,526 to Dodd, U. S. Patent 4,070,706 to Scheuneman, U. S. Patent 4,669,043 to Kaplinsky, U. S. Patent 4,811,203 to Hamstra, U. S. Patent 4,785,398 to Joyce et al., U. S. Patent 4,189,770 to Gannon et al., and U. S. Patent 3,896,419 to Lange et al. Notwithstanding the large amount of interest in cache memory systems and the large number of advances in such systems evidenced by the U.S. patents listed above, there still remains a number of shortcomings and deficiencies of such systems. For example, heretofore caches have only been able either to be reloaded or to service a subsequent load request at any one time. In other words, in prior art systems, if there is a miss in the cache, the cache is reloaded. Subsequent load requests to the cache cannot be processed until the cache is reloaded. This process; i.e., holding up of service of load requests until reloading, as required, is completed; is inefficient first of all because load instruction frequency generally exceeds reloading frequency. Thus, load requests that could and should be serviced without penalty may be unnecessarily delayed. Second, the prior art process described above is inefficient on a deeper level because load requests can have a data dependency which, because the load requests are delayed, can hold up overall system execution.

Based upon the foregoing, it should be perceived that prior art systems have certain shortcomings and deficiencies in the manner in which load request handling may conflict with data cache reloading. It is these shortcomings and deficiencies which are targeted for correction by the present invention.

The shortcomings and deficiencies of the "inefficient" process discussed above are overcome by the preferred embodiments of the present invention to be described. The described embodiment overcomes these shortcomings and deficiencies by including a block-size buffer with the cache. Data being reloaded is written into the buffer before being written into the cache, which frees the cache to service subsequent load requests from an associated execution unit.

More specifically, the described embodiment overcomes the shortcomings and deficiencies of the prior art by providing a computer memory system including a processor, a main memory operatively connected to the processor so that data stored within the main memory may be accessed for use by the processor, a data cache memory, and a buffer. The data cache memory mentioned above is disposed in circuit between the processor and the main memory. Further, the data cache memory is operatively connected to the processor to receive load requests therefrom and to respond directly thereto with data, if loaded, and to respond indirectly thereto by being reloaded with data from main memory, if not loaded.

The buffer mentioned above is disposed in circuit between the data cache memory and the main memory, in which position it acts to receive data to be reloaded into the data cache memory from the main memory and in which position it temporarily holds the data to be reloaded.

We will describe a method of data cache operation in which a data cache may receive load requests from an execution unit and respond thereto with stored data or by initiating reload operations, this method including the step of responding to a load request for data stored in the data cache with the stored data and the step of responding to a load request for data not stored in the data cache by initiating a reload operation. The step of initiating a reload operation may include the steps of accessing the data to be reloaded, storing the data to be reloaded in a buffer, and writing the data to be reloaded from the buffer into the data cache.

We will describe a data caching system including structure for servicing load requests. In embodiments of the present invention, involved processors must make requests in code order sequence. It is important to service the load requests in such a manner because of possible data dependency which can stop the execution of instructions. For store requests, which cannot interrupt the execution of instructions, it is not necessary to service the store requests while reloading. Implementing such a mechanism would merely increase the complexity of the data cache control logic without providing any benefit.

The structure for prioritizing servicing may include a buffer, possibly block-size, into which data to be loaded into said data cache is temporarily stored.

We will describe a data caching system which can efficiently handle both load requests from an execution unit and reloading operations.

We will describe a data caching system and method in which efficiency is maintained but in which priority is given to servicing load requests rather than to servicing store requests during reloading.

### BRIEF DESCRIPTION OF THE DRAWINGS

Other objects, advantages, and novel features of the present invention will become apparent based upon the following detailed description of the invention when taken in conjunction with the accompanying drawings wherein:
FIG. 1 is a block diagram of a prior art data caching system; and
FIG. 2 is a block diagram of a data caching system according to the teachings of the present invention.

### DETAILED DESCRIPTION OF THE INVENTION

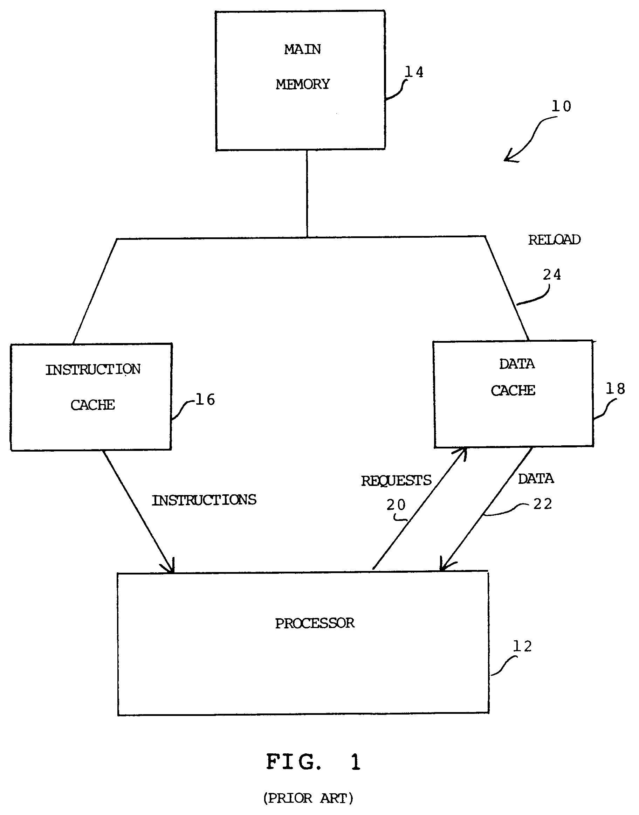

Referring now to the drawings wherein like or similar elements are designated with identical reference numerals throughout the several views and, more particularly, to FIG. 1, there is shown a prior art computer memory system generally designated by reference numeral 10. System 10 may be seen in FIG. 1 to include a processor 12 and a main memory 14. Disposed between the processor 12 and the main memory 14 are, in parallel, an instruction cache 16 and a data cache 18. The instruction cache 16 handles program statements that specify a particular operation and identify operands for the processor 12. The data cache 18, on the other hand, deals with meaningful representations that may be communicated, interpreted, or otherwise processed by the processor 12. The present invention focuses on element 18, the data cache.

Discussing the data cache 18 in somewhat greater detail, as mentioned in the description of related art section above, those skilled in the art have learned to implement the data cache 18 on a chip with a processor such as processor 12 to provide for faster data access. A data cache is a sketch pad memory, if you will, and can receive requests for data (indicated by reference numeral 20 in FIG. 1) and can respond to those requests with data (indicated by reference numeral 22 in FIG. 1) if the data is "loaded" in the cache 18. This process is an above-discussed "hit", wherein a load request from the processor 12 in one phase can be responded to by the data cache 18 in the next phase. If, on the other hand, requested data is not in the data cache 18; that is, if there is a "miss" in the cache; a block within the data cache 18 is allocated to receive the requested data and, in a subsequent phase, data is "reloaded" from the external memory 14 into the allocated block in the cache 18 (a process indicated by reference numeral 24 in FIG. 1). Generally, since a particular piece of data is related to data immediately around it (a characteristic known as "locality" to those skilled in the art), a block of data rather than a single data word is fetched during reload following a cache miss. However, to speed the process of actually providing requested data to the processor 12 in the event of a cache miss, the data actually requested (i.e., by a load request 20) is generally fetched first and forwarded to the processor 12 before the rest of the cache block is fetched. Also, to ensure data integrity, a single valid bit is generally assigned to each reloaded block of data.

As may be gathered from the description of related art section above, the computer memory system 10 suffers insofar as the data cache cannot be reloaded at the same time it handles a load request. Thus, in the event of a cache "miss", reloading must be completed before a subsequent load request 20 can be responded to, even if the request could be readily handled by data in the cache (i.e., a "hit"). This inability of prior art systems slows system performance and is otherwise inefficient, thereby constituting a shortcoming and deficiency of those systems.

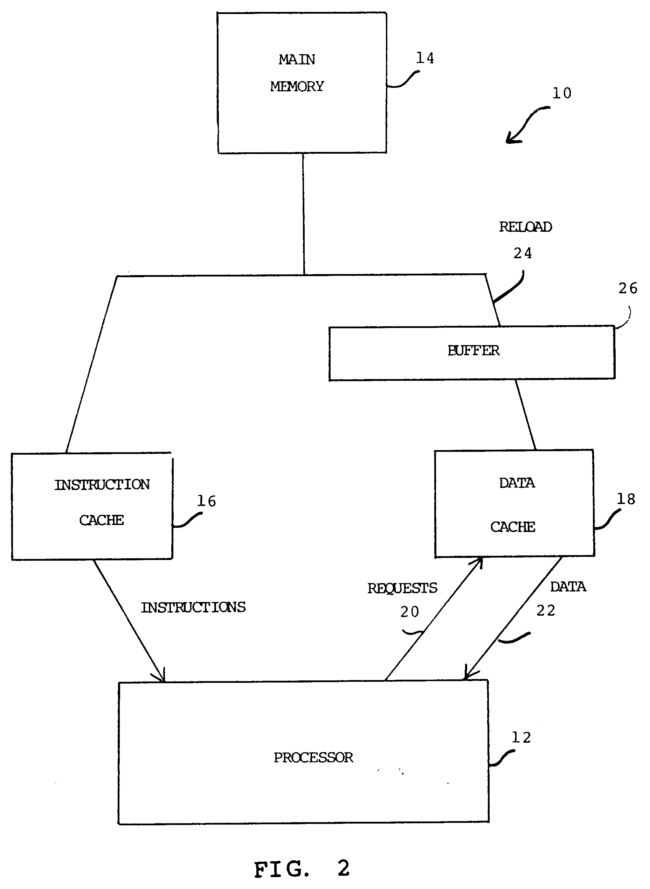

Referring now to FIG. 2, there is shown a computer memory system such as that shown in FIG. 1, except that the system shown in FIG. 2 has been modified according to the teachings of the present invention. It may be seen that the system of FIG. 2 differs from the system 10 of FIG. 1 primarily insofar as it includes a block-size buffer 26 disposed between the main memory 14 and the data cache 18. The purpose of this buffer 26 is to hold data being reloaded into the data cache 18 from main memory for a phase. Inclusion of this buffer 26 thereby "frees" the data cache, allowing it to service a subsequent load request 20 from the processor 12.

A description of operation of the system of FIG. 2 may be helpful at this point. In the event of a cache miss, as previously described, reloading of the cache 18 from main memory 14 is initiated. In the next phase data to be reloaded in the cache 18 from the main memory 14 is placed into the buffer 26 and forward to the processor 12 to satisfy the first request. During this same phase, the data cache 18 can service a subsequent load request 20 from the processor 12. A cache hit at this point will cause data to be sent from the data cache 18 to the execution unit 12 in the next phase. A cache miss for the subsequent load request, on the other hand, will simply access the cache again after completion of reload through the buffer 26. If there is a second miss, a second reload will be initiated. A hit can be promptly responded to, and so forth.

Although deceptively simple, the present invention offers a number of remarkable advantages to computer memory systems. First, distinguishing between a "load request" 20 and a "store request" (i.e., a load request that is not specifically depicted in either FIGs. 1 or 2, but which triggers reload operation 24), embodiments of the present invention service the load request while reloading rather than the store request. This is advantageous because, first of all, load instruction frequency is generally higher than that of store instruction. Therefore, giving service priority to load instructions renders it less likely there will be a service backlog. Second, load instructions can have a data dependency which can hold up processor execution. Thus, servicing load instructions before store instructions speeds processing operations and efficiency.

Based upon the foregoing, those skilled in the art should understand and appreciate how the present invention provides a computer memory system in which intelligent handling of load requests while reloading a data cache is effected. Embodiments of the present invention offer tremendous operating efficiencies for the small cost of a judiciously placed buffer. Broadly, the present invention provides a cache which efficiently handles load requests from an execution unit (e.g., processor 12) while reloading the cache block. Details of buffer/cache interrelation-ships, although important to the practice of the present invention, are generally conventional and otherwise discussed at length in the related European Patent application reference (HRW/TT0138/BEP) thus, there is no need to discuss those details herein.

Obviously, numerous modifications and variations of the present invention may be made in light of the teachings above. Accordingly, within the scope of the appended claims, the present invention may be practiced otherwise than as specifically described herein.

## Claims

1. A computer memory system comprising:
a processor:
a main memory operatively connected to said processor so that data stored within said main memory may be accessed for use by said processor;
a data cache memory disposed in circuit between said processor and said main memory, said data cache memory operatively connected to said processor to receive load requests from said processor and to respond directly to those load requests with data, if loaded, and to respond indirectly to those load requests by being reloaded with data from main memory, if not loaded; and
a buffer disposed in circuit between said data cache memory and said main memory, said buffer acting to receive data to be reloaded into said data cache memory from said main memory and to temporarily hold said data.

2. A computer memory system as recited in claim 1, wherein said buffer is a block-size buffer.

3. A method of data cache operation in which a data cache may receive load requests from an execution unit and respond thereto with stored data or by initiating reload operations, said method comprising the steps of:
responding to a load request for data stored in the data cache with said stored data;
responding to a load request for data not stored in the data cache by initiating a reload operation, said step of initiating a reload operation comprising the steps of
accessing said data to be reloaded;
storing said data to be reloaded in a buffer; and
writing said data to be reloaded from said buffer into said data cache.

4. A method of data cache operation as recited in claim 3, wherein said step of storing said data to be reloaded in a buffer comprises the step of storing said data to be reloaded in a block-size buffer.

5. A data caching system comprising:
means for servicing load requests;
means for servicing store requests; and
means for prioritizing servicing of load requests, said means for prioritizing servicing comprising a block-size buffer into which data to be loaded into said data cache is temporarily stored.
